# FASCICULE DE BREVET EUROPEEN

(11) **EP 3 354 510 B1**
(45) Date de publication et mention de la délivrance du brevet: **22.09.2021**
(21) Numéro de dépôt: 18153699.6
(22) Date de dépôt: 26.01.2018
(51) Int. Cl.: B60L 5/42, B60M 1/04, B60M 1/36, B60M 1/10, B61L 23/04, B61L 27/00

(54) **PROCÉDÉ DE MAINTENANCE D'UN DISPOSITIF D'ALIMENTATION PAR LE SOL POUR VÉHICULE DE TYPE TRAMWAY**
WARTUNGSVERFAHREN EINER VORRICHTUNG ZUR STROMZUFÜHRUNG ÜBER DEN BODEN FÜR FAHRZEUGS VOM TYP STRASSENBAHN
METHOD FOR THE MAINTENANCE OF A GROUND-LEVEL POWER SUPPLY DEVICE FOR A TRAM-LIKE VEHICLE

(30) Priorité: 27.01.2017 FR 1750671
(43) Date de publication de la demande: 01.08.2018
(73) Titulaire: ALSTOM Transport Technologies, 93400 Saint-Ouen (FR)
(72) Inventeur: BOICHOT, Philippe, 21000 Dijon (FR); HMAD, Ouadie, 77130 Momtereau-Fault-Yonne (FR); HIELY, Frederic, 84320 Entraigues (FR); AUDIBERT, Stephan, 83910 Pourrieres (FR)
(74) Mandataire: Lavoix

(56) Documents cités:
- EP-A1- 0 962 353
- EP-A1- 1 352 777
- DD-A1- 133 422
- JP-A- 2000 079 839
- JP-A- 2007 288 893
- JP-A- 2008 285 118
- Atsuhiro Takahashi ET AL: "Overhead Contact Line Monitoring and Prediction of Contact Wire Localized Wear Points", JR EAST Technical Review No.29-Summer 2014, 1 janvier 2014 (2014-01-01), pages 22-25, XP055319971, Extrait de l'Internet: URL:https://www.jreast.co.jp/e/development /tech/pdf_29/tec-29-22-25eng.pdf [extrait le 2016-11-16]

## Description

L'invention se rapporte à un procédé de maintenance d'un dispositif d'alimentation en énergie électrique par le sol pour un véhicule de transport, ledit dispositif comportant : un rail d'alimentation électrique ; un dispositif de détection de coordonnées spatiales d'un véhicule ; et un patin d'alimentation ; ledit dispositif de détection et ledit patin d'alimentation équipant un même véhicule de transport, le patin d'alimentation étant apte à frotter contre le rail d'alimentation au cours d'un déplacement dudit véhicule le long dudit rail.

Le document EP1352777 divulgue un dispositif d'alimentation en énergie électrique pour un véhicule de transport. L'alimentation par le sol ou APS est une méthode d'alimentation électrique pour tramways. Un dispositif d'alimentation par le sol est par exemple décrit dans les documents EP0962353 et EP1043187. Le rail d'alimentation est segmenté en tronçons électriquement conducteurs séparés par des tronçons isolants. Les tronçons conducteurs sont alimentés uniquement lorsqu'ils sont entièrement recouverts par le tram, évitant ainsi tout risque d'électrocution pour les autres usagers (piétons, cycles, motocycles).

Les structures des tronçons conducteurs et des tronçons isolants entraînent une usure différente dans le temps et en fonction des sollicitations. Ce phénomène est accentué par le passage de véhicules, de type camions ou autobus, sur le rail d'alimentation.

Ces différences d'usure induisent l'apparition de désalignements entre les tronçons, qui génèrent des chocs encaissés par les patins d'alimentation. Ces chocs conduisent à des dégradations desdits patins ainsi que du rail d'alimentation.

Il est donc souhaitable de détecter ces désalignements le plus tôt possible après leur apparition, afin de pouvoir y remédier.

A cet effet, l'invention a pour objet un procédé de maintenance du type précité, selon la revendication 1.

Suivant d'autres aspects avantageux de l'invention, le procédé comporte l'une ou plusieurs des caractéristiques suivantes, prises isolément ou suivant toutes les combinaisons techniquement possibles :
- le procédé comprend, entre les étapes de mesure des vibrations et de comparaison avec la valeur seuil, une étape de segmentation des vibrations mesurées ;
- l'étape de détermination des coordonnées spatiales correspondant à des vibrations supérieures à la valeur seuil comprend une représentation graphique du rail d'alimentation électrique, sur laquelle lesdites coordonnées spatiales sont signalées par un marqueur visuel.

L'invention se rapporte en outre à un dispositif d'alimentation en énergie électrique par le sol pour un véhicule de transport, selon la revendication 4.

Suivant d'autres aspects avantageux de l'invention, le dispositif comporte l'une ou plusieurs des caractéristiques suivantes, prises isolément ou suivant toutes les combinaisons techniquement possibles :
- le capteur de vibrations du patin d'alimentation comporte un accéléromètre ;
- le patin d'alimentation comprend au moins deux accéléromètres, chacun étant situé proche d'une extrémité du patin selon une direction de déplacement du véhicule ;
- le patin d'alimentation comprend une semelle et au moins un accéléromètre situé au milieu de la semelle selon une direction de déplacement du véhicule ;
- le patin d'alimentation comprend une semelle et un levier, le levier comprenant un dispositif d'évaluation des contraintes et/ou des efforts verticaux et transversaux, ledit dispositif d'évaluation comprenant au moins un accéléromètre et/ou au moins une jauge de contraintes ;

L'invention se rapporte en outre à une installation pour véhicule de transport, comportant : un dispositif d'alimentation tel que décrit ci-dessus ; un véhicule de transport, équipé du dispositif de détection et du patin d'alimentation dudit dispositif d'alimentation ; et deux rails de circulation situés de part et d'autre du rail d'alimentation, le véhicule de transport étant muni de moyens de déplacement sur lesdits rails de circulation.

L'invention sera mieux comprise à la lecture de la description qui va suivre, donnée uniquement à titre d'exemple non limitatif et faite en se référant aux dessins sur lesquels :
- les figures 1 et 2 sont des vues partielles d'une installation pour véhicule de transport, comportant un dispositif d'alimentation selon un mode de réalisation de l'invention ;
- la figure 3 est une vue de détail du véhicule de transport de l'installation de la figure 1 ;
- la figure 4 représente un logigramme correspondant à un procédé de maintenance du dispositif d'alimentation des figures 1 et 2, selon un mode de réalisation de l'invention ; et
- la figure 5 est une représentation graphique correspondant à une étape du procédé de maintenance de la figure 4.

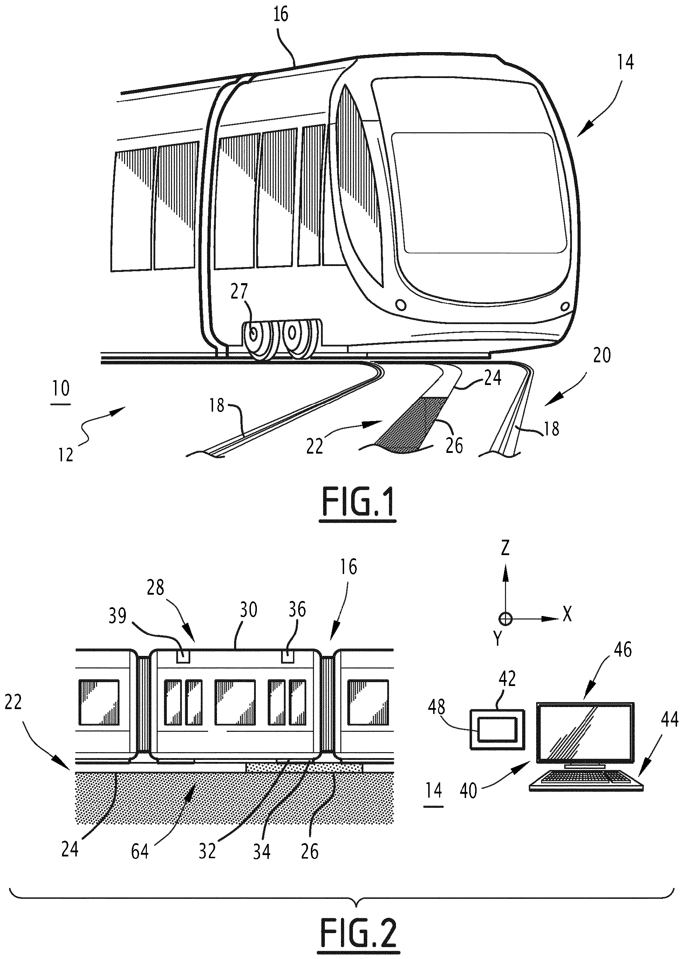

La figure 1 représente de manière partielle une installation 10 pour véhicule de transport de type tramway.

L'installation 10 comporte un circuit ferroviaire 12 et un dispositif 14 d'alimentation en énergie électrique par le sol. L'installation 10 comporte en outre un véhicule de transport 16 de type tramway, alimenté par ledit dispositif d'alimentation 14. Le circuit ferroviaire 12 comporte deux rails de circulation 18 sensiblement parallèles. Les rails 18 sont notamment encastrés dans une voirie routière 20 sur au moins une partie du circuit ferroviaire 12.

Le dispositif d'alimentation 14 comporte un rail d'alimentation 22, s'étendant le long du circuit ferroviaire 12 et disposé entre les rails de circulation 18.

Le rail d'alimentation 22 est segmenté en tronçons électriquement conducteurs 24 séparés par des tronçons isolants 26. Le dispositif d'alimentation 14 comporte en outre une ligne électrique (non représentée) enfouie dans la voirie routière 20 parallèlement au rail d'alimentation 22 et alimentée en permanence. Le dispositif d'alimentation 14 comporte en outre des moyens (non représentés) de commutation pour le raccordement sélectif des tronçons conducteurs 24 lorsque le véhicule 16 est détecté au-dessus de ces tronçons.

Le véhicule 16 comporte des moyens de circulation sur les rails de circulation 18. Lesdits moyens sont de préférence des roues 27. La figure 2 montre une base orthonormée (X, Y, Z) associée au véhicule 16. La direction X représente une direction horizontale de déplacement du véhicule 16, la direction Y représente une direction transversale et la direction Z représente la verticale.

Le véhicule 16 comporte de préférence plusieurs voitures 28, comme représenté sur la figure 2. Chaque voiture comporte notamment une caisse 30.

Le dispositif d'alimentation 14 comporte au moins un, et de préférence plusieurs patins d'alimentation 32. Les patins d'alimentation 32 sont fixés en partie inférieure de la caisse 30 d'au moins une voiture 28. Chaque patin d'alimentation 32 est apte à transmettre au véhicule 16 de l'énergie électrique du rail d'alimentation 22, par frottement contre ledit rail au cours d'un déplacement du véhicule 16 sur le circuit ferroviaire 12.

Dans le cadre de la présente invention, au moins un patin d'alimentation 32 du véhicule 16 comporte un capteur électronique 34 de vibrations dudit patin au contact du rail d'alimentation 22.

Par ailleurs, le dispositif d'alimentation 14 comporte un détecteur électronique 36 de coordonnées spatiales du véhicule 16. Lesdites coordonnées spatiales sont, par exemple, la longitude et la latitude du détecteur 36. Ledit détecteur 36, notamment relié à un système de type GPS, est situé de préférence sur la voiture 28 portant le patin 32 muni du capteur de vibrations 34.

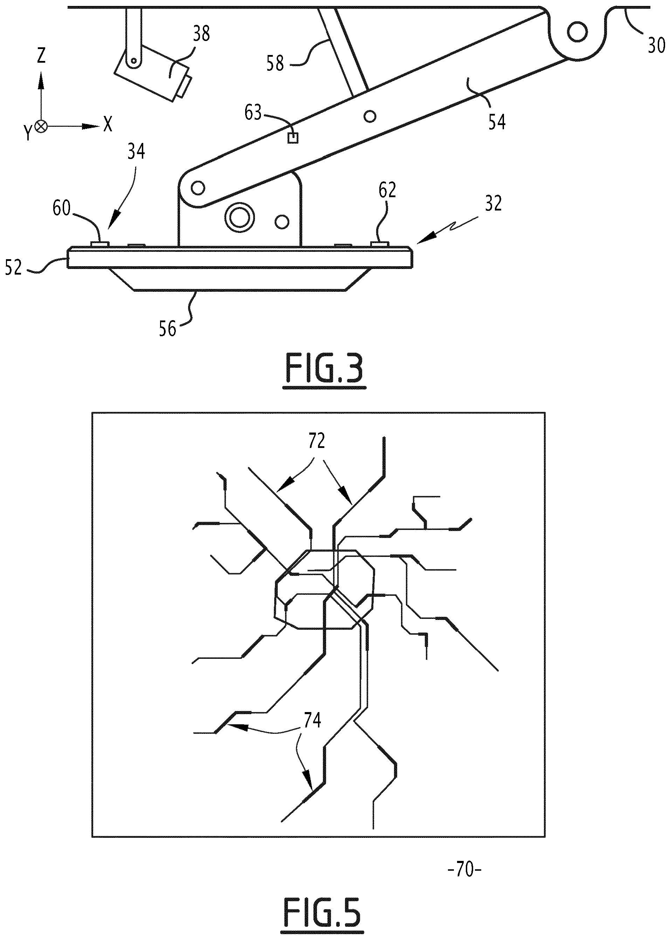

Le dispositif d'alimentation 14 comporte en outre au moins une caméra 38 (figure 3), de préférence infra-rouge, fixée en partie inférieure de la caisse 30 de la voiture 28. La caméra 38 permet de visualiser le positionnement du patin 32 par rapport au rail d'alimentation 22 ou à la caisse de la voiture 28.

De préférence, le dispositif d'alimentation 14 comporte en outre au moins un capteur de vitesse 39, situé sur le véhicule 16, apte à mesurer la vitesse de déplacement dudit véhicule.

Le dispositif d'alimentation 14 comporte en outre un calculateur 40 tel qu'un ordinateur. Le calculateur 40 comprend un processeur 42, une interface homme-machine 44 telle qu'un clavier et une unité d'affichage 46 telle qu'un écran. Le processeur 42 mémorise un programme 48.

Le calculateur 40 est muni de moyens de communication, par exemple par ondes radio, avec le capteur de vibrations 34 et le détecteur de coordonnées spatiales 36. Le calculateur 40 est de préférence situé dans un local extérieur au véhicule 16. En variante, le calculateur 40 est situé à bord dudit véhicule 16.

De préférence, le calculateur 40 est en outre muni de moyens de communication avec la caméra 38 et avec le capteur de vitesse 39.

La figure 3 montre une vue de détail du patin d'alimentation 32 comportant un capteur de vibrations 34.

Le patin d'alimentation 32 comporte par exemple une semelle 52 et un levier 54. La semelle 52 comporte une surface inférieure 56 de contact avec le rail d'alimentation 22. Le levier 54 comporte deux extrémités, articulées respectivement à la semelle 52 et à la caisse 30 de la voiture 28. Selon un mode de réalisation, le patin d'alimentation 32 comporte en outre un actionneur 58 relié au levier 54 et permettant de déplacer verticalement la semelle 52, de sorte à l'écarter ou à la rapprocher du rail d'alimentation 22.

Selon un mode de réalisation préférentiel, le capteur de vibrations 34 comporte au moins un accéléromètre 60, 62.

Plus précisément, dans le mode de réalisation de la figure 3, le capteur de vibrations 34 est formé de deux accéléromètres 60 et 62. Chacun desdits accéléromètres est situé proche d'une extrémité de la semelle 52 selon la direction X.

Alternativement, le capteur de vibrations 34 comporte un accéléromètre au milieu de la semelle 52 selon la direction X.

Chaque accéléromètre 60, 62 est apte à mesurer des vibrations de la semelle 52, notamment selon les directions X, Y et Z.

Avantageusement, le levier 54 comprend un dispositif 63 d'évaluation des contraintes et/ou des efforts verticaux et transversaux. Ledit dispositif d'évaluation 63 comprend par exemple au moins un accéléromètre et/ou au moins une jauge de contraintes. Le levier 54 est par exemple équipé d'une première jauge de contrainte dans une partie supérieure et d'une deuxième jauge de contrainte dans une partie inférieure. Le dispositif d'évaluation 63 est muni de moyens de communication avec le calculateur 40.

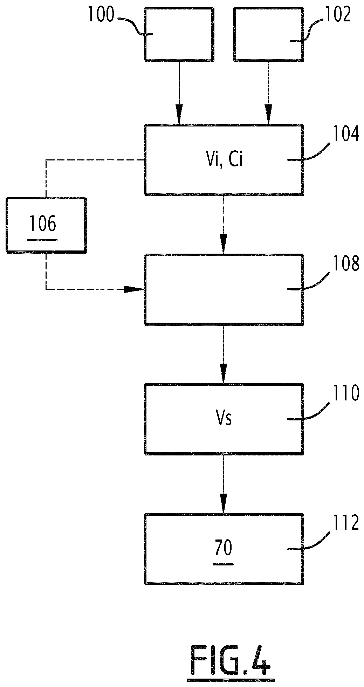

Un procédé de maintenance de l'installation 10 et du dispositif d'alimentation 14 va maintenant être décrit. Ledit procédé est schématiquement représenté par un logigramme à la figure 4.

Tout d'abord, le véhicule 16 se déplace sur le circuit ferroviaire 12. Le détecteur 36 détermine les coordonnées spatiales dudit véhicule 16 à plusieurs instants tᵢ successifs au cours dudit déplacement (étape 100). Simultanément, le capteur 34 mesure les vibrations du patin d'alimentation 32 (étape 102).

De préférence, le capteur de vitesse 39 mesure simultanément la vitesse de déplacement du véhicule 16.

De préférence, l'au moins une caméra 38 enregistre une vidéo du déplacement du patin 32 par rapport à la caisse 30 ou au rail d'alimentation 22.

Le niveau des vibrations mesurées par le capteur 34 dépend notamment de l'état du rail d'alimentation 22. Par exemple, si ledit rail est désaligné au niveau d'une jonction 64 (figure 2) entre un tronçon conducteur 24 et un tronçon isolant 26, le patin 32 subit un choc en passant au contact de ladite jonction. Ce choc se traduit par un niveau élevé de vibrations mesurées.

Les informations acquises par le capteur 34 et par le détecteur 36, et éventuellement par le capteur de vitesse 39 et l'au moins une caméra 38, soient respectivement les valeurs de vibration mesurée Vᵢ, les coordonnées spatiales Cᵢ et éventuellement la vitesse du véhicule et la vidéo, sont communiquées au calculateur 40 (étape 104).

Dans le cas où le capteur 34 est formé de plusieurs accéléromètres 60, 62, la valeur Vᵢ correspond à un vecteur dont chaque colonne correspond aux mesures desdits accéléromètres 60 et 62. Par la suite, ces mesures sont par exemple moyennées.

Selon un mode de réalisation préférentiel, afin de supprimer le bruit et de faciliter l'analyse des informations, le procédé comprend de préférence une étape dans laquelle les valeurs de vibration mesurées Vᵢ sont ensuite soumises à une étape de segmentation (étape 106). Par exemple, une représentation graphique de la fonction [instant de mesure (t_{¡}) / vibration mesurée (V_{¡})] est convertie par le calculateur 40 en segments séparés par des points d'inflexion, selon un modèle de segmentation. Chaque valeur Vᵢ est alors remplacée par une valeur modifiée V'_{¡}. Un procédé impliquant une étape de segmentation est par exemple décrit dans le document WO2010/043951.

Le programme 48 associe ensuite chaque valeur de vibration Vᵢ ou V'ᵢ aux coordonnées spatiales Cᵢ correspondantes, notamment acquises au cours d'un même instant tᵢ (étape 108).

Avantageusement, un point kilométrique du véhicule 16 sur la voie est calculé à partir de la vitesse dudit véhicule. Le point kilométrique est le nombre de kilomètres parcourus par le véhicule sur la voie à partir d'un repère donné. Les coordonnées spatiales C₁ sont avantageusement ajustées à l'aide du point kilométrique : les coordonnées spatiales C₁ permettent, par exemple, de connaître généralement le trajet du véhicule et le point kilométrique l'emplacement précis dudit véhicule sur la voie correspondant au trajet. Chaque valeur Cᵢ est alors remplacée par une valeur modifiée C'_{¡}.

Le programme 48 compare les valeurs de vibration Vᵢ ou V'ᵢ avec une valeur seuil V_{S} mémorisée dans le programme 48. Lesdites valeurs de vibration Vᵢ ou V'ᵢ sont alors classées en deux groupes : les « valeurs normales » et les « valeurs anormales », respectivement inférieures et supérieures à la valeur seuil V_{S} (étape 110).

Le programme 48 détermine ainsi les coordonnées spatiales Cᵢ ou C'ᵢ correspondant à des « valeurs anormales » de vibration (étape 112). De préférence, cette étape de détermination comprend l'élaboration d'une représentation graphique de type carte 70 du circuit ferroviaire 12, telle que représentée sur la figure 5. Dans cet exemple, le circuit ferroviaire 12 correspond au réseau de tramway d'une ville.

La carte 70 est par exemple affichée sur l'écran 46 de l'ordinateur 40. La carte 70 fait apparaître de manière visuellement différente les portions du circuit ferroviaire 12 correspondant aux « valeurs normales » et aux « valeurs anormales » de vibration. Par exemple, les portions « valeurs normales » 72 et les portions « valeurs anormales » 74 sont signalées par des couleurs différentes.

La localisation des zones de vibrations anormales sur une carte du circuit ferroviaire 12 permet alors d'envoyer rapidement une équipe d'intervention aux endroits concernés, notamment pour rectifier l'alignement des tronçons au niveau des jonctions 64.

Selon une variante de réalisation, le programme 48 mémorise plusieurs valeurs seuil, par exemple deux valeurs seuil V_{S1} et V_{S2} avec V_{S1}<V_{S2}. Cette variante permet de classer les valeurs de vibration Vᵢ ou V'ᵢ en trois groupes, par exemple « valeurs normales », « valeurs anormales priorité 1 » et « valeurs anormales priorité 2 ». Cette variante permet de hiérarchiser les niveaux de priorité des interventions de maintenance sur le circuit ferroviaire 12.

Le calculateur 40 analyse en parallèle la vidéo enregistrée par la caméra 38. Le calculateur 40 détecte, par exemple, tout saut vertical du patin ou tout débattement du patin selon la direction transversale Y.

Cela permet notamment de corréler toute vibration anormale du patin détectée par le capteur de vibrations 34, 60, 62 avec un saut ou un débattement du patin.

Avantageusement, le calculateur 40 analyse en parallèle les contraintes et/ou les efforts verticaux et transversaux du patin 32, communiqués par le dispositif d'évaluation 63. La géométrie de la voie peut présenter des points durs, en particuliers dans le passage d'aiguille, ce qui conduit à générer des efforts importants sur le levier 54 du patin, notamment en cas de blocage partiel de celui-ci. Le dispositif d'évaluation 63 permet notamment de détecter un défaut dans le levier 54 avant rupture de celui-ci et/ou de comprendre la cause de la rupture le cas échéant.

Le procédé décrit ci-dessus est avantageusement mis en œuvre en phase de test du circuit ferroviaire 12 pour détecter des problèmes d'installation du dispositif d'alimentation 14. Le procédé est également mis en œuvre en phase d'utilisation, afin de déployer de manière optimale les équipes de maintenance sur le réseau. Avantageusement, plusieurs rames de tramway circulant habituellement sur le circuit ferroviaire 12 sont équipées de capteurs 34, 36, comme le véhicule 16 décrit ci-dessus. Ainsi, l'état du réseau est mis à jour en temps réel.

## Revendications

1. Procédé de maintenance d'un dispositif (14) d'alimentation en énergie électrique par le sol pour un véhicule (16) de transport, ledit dispositif comportant :
- un rail (22) d'alimentation électrique par le sol, ledit rail d'alimentation électrique comportant des segments électriquement conducteurs (24) et des segments électriquement isolants (26), alternés et sensiblement alignés,
ledit rail d'alimentation électrique s'étendant entre deux rails (18) de circulation du véhicule (16) de transport ;
- un dispositif (36) de détection de coordonnées spatiales ; et
- un patin d'alimentation (32) ;
ledit dispositif de détection (36) et ledit patin d'alimentation (32) équipant le même véhicule de transport (16),
le patin d'alimentation étant apte à frotter contre le rail d'alimentation au cours d'un déplacement dudit véhicule le long dudit rail d'alimentation électrique ;
- le patin d'alimentation comportant un capteur (34, 60, 62) de vibrations dudit patin au contact du rail d'alimentation électrique ;
- le dispositif d'alimentation (14) comportant en outre au moins une caméra (38) permettant de visualiser un positionnement du patin d'alimentation (32) par rapport au rail (22) d'alimentation ou à une caisse du véhicule ; et
- le procédé comportant les étapes suivantes :
- déplacement du véhicule de transport le long du rail d'alimentation électrique ;
- au cours dudit déplacement, mesure des vibrations du patin d'alimentation (100) et détection simultanée des coordonnées spatiales du véhicule (102) ; puis
- comparaison (110) des vibrations mesurées du patin d'alimentation avec une valeur seuil, et
- détermination (112) des coordonnées spatiales correspondant à des vibrations supérieures à ladite valeur seuil ; et
- en parallèle, enregistrement d'une vidéo par la caméra (38) ; analyse de ladite vidéo de sorte à détecter un saut vertical du patin ou un débattement du patin selon une direction (Y) perpendiculaire au déplacement du véhicule ; et corrélation d'une vibration du patin supérieure à la valeur seuil, mesurée par le capteur de vibrations, avec ledit saut ou ledit débattement du patin.

2. Procédé de maintenance selon la revendication 1, comprenant, entre les étapes de mesure des vibrations (100) et de comparaison avec la valeur seuil (110), une étape de segmentation (106) des vibrations mesurées.

3. Procédé de maintenance selon la revendication 1 ou la revendication 2, dans lequel l'étape (112) de détermination des coordonnées spatiales correspondant à des vibrations supérieures à la valeur seuil comprend une représentation graphique (70) du rail d'alimentation électrique, sur laquelle lesdites coordonnées spatiales sont signalées par un marqueur visuel (74).

4. Dispositif (14) d'alimentation en énergie électrique par le sol pour un véhicule (16) de transport, ledit dispositif comportant :
- un rail (22) d'alimentation électrique par le sol ; ledit rail d'alimentation électrique comportant des segments électriquement conducteurs (24) et des segments électriquement isolants (26), alternés et sensiblement alignés,
ledit rail d'alimentation électrique étant destiné à s'étendre entre deux rails (18) de circulation d'un véhicule ;
- un dispositif (36) de détection de coordonnées spatiales d'un véhicule ; et
- un patin d'alimentation (32) d'un véhicule, apte à frotter contre le rail d'alimentation au cours d'un déplacement dudit véhicule le long dudit rail ;
ledit dispositif de détection (36) et ledit patin d'alimentation (32) étant destinés à équiper ledit même véhicule,
dispositif d'alimentation (14) Pour lequel :
- le patin d'alimentation comporte un capteur (34, 60, 62) de vibrations dudit patin au contact du rail d'alimentation ;
- le dispositif d'alimentation comporte en outre au moins une caméra (38) permettant de visualiser un positionnement du patin d'alimentation (32) par rapport au rail (22) d'alimentation ou à une caisse du véhicule ; et
- le dispositif d'alimentation comporte des moyens (40, 48) de mise en œuvre d'un procédé selon l'une des revendications précédentes.

5. Dispositif d'alimentation selon la revendication 4, dans lequel le capteur de vibrations du patin d'alimentation comporte un accéléromètre (60, 62).

6. Dispositif d'alimentation selon la revendication 5, dans lequel le patin d'alimentation comprend au moins deux accéléromètres (60, 62), chacun étant situé proche d'une extrémité du patin selon une direction (X) de déplacement du véhicule.

7. Dispositif d'alimentation selon la revendication 5, dans lequel le patin d'alimentation comprend une semelle (52) et au moins un accéléromètre (34, 60, 62) situé au milieu de la semelle (52) selon une direction (X) de déplacement du véhicule.

8. Dispositif d'alimentation selon l'une quelconque des revendications 5 à 7, dans lequel le patin d'alimentation comprend une semelle (52) et un levier (54), le levier (54) comprenant un dispositif (63) d'évaluation des contraintes et/ou des efforts verticaux et transversaux, ledit dispositif d'évaluation comprenant au moins un accéléromètre et/ou au moins une jauge de contraintes.

9. Installation (10) pour véhicule de transport, comportant :
- un dispositif d'alimentation (14) en énergie électrique par le sol selon l'une des revendications 4 à 8 ;
- un véhicule de transport (16), équipé du dispositif de détection (36) et du patin d'alimentation (32) dudit dispositif d'alimentation ; et
- deux rails (18) de circulation situés de part et d'autre du rail d'alimentation,
le véhicule de transport étant muni de moyens (27) de déplacement sur lesdits rails de circulation.

## Patentansprüche

1. Verfahren zur Wartung einer Vorrichtung (14) zur Versorgung mit elektrischer Energie über den Boden für ein Transport-Fahrzeug (16), wobei die Vorrichtung aufweist:
- eine Schiene (22) zur elektrischen Versorgung über den Boden, wobei die besagte Schiene zur elektrischen Versorgung elektrisch leitende Segmente (24) und elektrisch isolierende Segmente (26) aufweist, die abwechselnd und im Wesentlichen fluchtend sind,
wobei sich die Schiene zur elektrischen Versorgung zwischen zwei Lauf-Schienen (18) für das Transport-Fahrzeug (16) erstrecken,
- eine Vorrichtung (36) zur Erfassung von räumlichen Koordinaten, und
- einen Versorgungs-Schuh (32),
wobei die besagte Vorrichtung zur Erfassung (36) und der besagte Versorgungs-Schuh (32) das gleiche Transport-Fahrzeug (16) ausstatten,
wobei der Versorgungs-Schuh imstande ist, gegen die Schiene zur Versorgung zu schleifen während einer Verlagerung des besagten Fahrzeugs entlang besagter Schiene zur elektrischen Versorgung,
- wobei der Versorgungs-Schuh aufweist
einen Vibrationen-Sensor (34, 60, 62) für den Schuh im Kontakt mit der Schiene zur elektrischen Versorgung,
- wobei die Vorrichtung zur Versorgung (14) ferner wenigstens eine Kamera (38) aufweist, die ermöglicht, eine Positionierung des Versorgungs-Schuhs (32) bezüglich der Schiene (22) zur Versorgung oder bezüglich eines Gehäusekastens des Fahrzeugs zu visualisieren, und wobei
- das Verfahren die folgenden Schritte aufweist:
- Verlagern des Transport-Fahrzeugs entlang der Schiene zur elektrischen Versorgung,
- während des besagten Verlagerns, Messen von Vibrationen des Versorgungs-Schuhs (100) und simultanes Erfassen von räumlichen Koordinaten des Fahrzeugs (102), dann
- Vergleichen (110) der gemessenen Vibrationen des Versorgungs-Schuhs mit einem Schwellenwert, und
- Ermitteln (112) der räumlichen Koordinaten, die zu Vibrationen korrespondieren, die größer als der besagte Schwellenwert sind, und
- parallel dazu, Aufnehmen eines Videos mittels der Kamera (38), Analysieren des besagten Videos, um einen vertikalen Sprung des Schuhs oder einen Ausschlag des Schuhs entlang einer Richtung (Y) senkrecht zur Verlagerung des Fahrzeugs zu erfassen, und Korrelieren einer Vibration des Schuhs, die größer ist als der Schwellenwert, gemessen mittels des Vibrationen-Sensors, mit dem besagten Sprung oder dem besagten Ausschlag des Schuhs.

2. Verfahren zur Wartung gemäß Anspruch 1, aufweisend, zwischen den Schritten des Messens der Vibrationen (100) und des Vergleichens mit dem Schwellenwert (110), einen Schritt des Segmentierens (106) der gemessenen Vibrationen.

3. Verfahren zur Wartung gemäß Anspruch 1 oder Anspruch 2, wobei der Schritt (112) des Erfassens der räumlichen Koordinaten, die zu den Vibrationen korrespondieren, die größer als der Schwellenwert sind, aufweist ein grafisches Repräsentieren (70) der Schiene zur elektrischen Versorgung, bei welchem die besagten räumlichen Koordinaten durch einen visuellen Marker (74) angegeben werden.

4. Vorrichtung (14) zur Versorgung mit elektrischer Energie über den Boden für ein Transport-Fahrzeug (16), wobei die Vorrichtung aufweist:
- eine Schiene (22) zur elektrischen Versorgung über den Boden, wobei die besagte Schiene zur elektrischen Versorgung elektrisch leitende Segmente (24) und elektrisch isolierende Segmente (26) aufweist, die abwechselnd und im Wesentlichen fluchtend sind,
wobei die Schiene zur elektrischen Versorgung dazu bestimmt ist, sich zwischen zwei Lauf-Schienen (18) für ein Fahrzeug zu erstrecken,
- eine Vorrichtung (36) zur Erfassung von räumlichen Koordinaten eines Fahrzeugs, und
- einen Versorgungs-Schuh (32) für ein Fahrzeug, der imstande ist, gegen die Schiene zur Versorgung zu schleifen während einer Verlagerung des besagten Fahrzeugs entlang besagter Schiene,
wobei die besagte Vorrichtung zur Erfassung (36) und der besagte Versorgungs-Schuh (32) dazu bestimmt sind, das gleiche Transport-Fahrzeug (16) auszustatten,
wobei bei der Vorrichtung zur Versorgung (14)
- der Versorgungs-Schuh aufweist einen Vibrationen-Sensor (34, 60, 62) für den Schuh im Kontakt mit der Schiene zur Versorgung,
- die Vorrichtung zur Versorgung ferner aufweist wenigstens eine Kamera (38), die ermöglicht, eine Positionierung des Versorgungs-Schuhs (32) bezüglich der Schiene (22) zur Versorgung oder bezüglich eines Gehäusekastens des Fahrzeugs zu visualisieren, und
- die Vorrichtung zur Versorgung aufweist Mittel (40, 48) zum Durchführen eines Verfahrens gemäß einem der vorhergehenden Ansprüche.

5. Vorrichtung zur Versorgung gemäß Anspruch 4, wobei der Vibrationen-Sensor für den Versorgungs-Schuh einen Beschleunigungsmesser (60, 62) aufweist.

6. Vorrichtung zur Versorgung gemäß Anspruch 5, wobei der Versorgungs-Schuh aufweist wenigstes zwei Beschleunigungsmesser (60, 62), wobei jeder entlang einer Verlagerungs-Richtung (X) des Fahrzeugs nahe einem Ende des Schuhs angeordnet ist.

7. Vorrichtung zur Versorgung gemäß Anspruch 5, wobei der Versorgungs-Schuh eine Sohle (52) und wenigstens einen Beschleunigungsmesser (34, 60, 62) aufweist, der entlang einer Verlagerungs-Richtung (X) des Fahrzeugs mitten auf der Sohle (52) angeordnet ist.

8. Vorrichtung zur Versorgung gemäß irgendeinem der Ansprüche 5 bis 7, wobei der Versorgungs-Schuh eine Sohle (52) und einen Hebel (54) aufweist, wobei der Hebel (54) aufweist eine Vorrichtung (63) zur Ermittlung von vertikalen und transversalen Spannungen und/oder Kräften, wobei die Vorrichtung zur Ermittlung aufweist wenigstens einen Beschleunigungsmesser und/oder wenigstens einen Dehnungsmessstreifen.

9. Einrichtung (10) für ein Transport-Fahrzeug, aufweisend:
- eine Vorrichtung zur Versorgung (14) mit elektrischer Energie über den Boden gemäß einem der Ansprüche 4 bis 8,
- ein Transport-Fahrzeug (16), das mit der Vorrichtung zur Erfassung (36) und dem Versorgungs-Schuh (32) der besagten Vorrichtung zur Versorgung ausgestattet ist, und
- zwei Lauf-Schienen (18), die beiderseits der Schiene zur Versorgung angeordnet sind,
wobei das Transport-Fahrzeug ausgestattet ist mit Mitteln (27) zur Verlagerung auf den besagten Lauf-Schienen.

## Claims

1. A method for the maintenance of a ground-level power supply device (14) for a transport vehicle, said device including:
- a ground-level power supply rail (22); said power supply rail including electrically conductive segments (24) and electrically insulating segments (26), alternating and substantially aligned ; the power supply rail extending between two travel rails (18) of the transport vehicle (16) ;
- a device (36) for detecting spatial coordinates of a vehicle; and
- a supply shoe (32);
said detection device (36) and said supply shoe (32) equipping a same transport vehicle (16),
the supply shoe being able to rub against the power supply rail during a movement of said vehicle along said power supply rail;
the supply shoe including a sensor (34, 60, 62) detecting vibrations of said shoe in contact with the power supply rail;
the power supply device (14) including at least one camera (38), allowing to visualize a position of the supply shoe (32) relative to the supply rail (22) or to a body of the vehicle ; and
the method including the following steps:
- moving the transport vehicle along the power supply rail;
- during said movement, measuring vibrations of the supply shoe (100) and simultaneously detecting spatial coordinates of the vehicle (102); then
- comparing (110) measured vibrations of the supply shoe with a threshold value, and
- determining (112) spatial coordinates corresponding to vibrations above said threshold value ; and
- in parallel, recording of a video by the camera (38) ; analysis of said video so as to detect a vertical jump of the shoe or a displacement of the shoe in a direction (Y) perpendicular to the displacement of the vehicle ; and correlation of a vibration of the supply shoe above the threshold value, measured by the sensor, with said jump or displacement of the shoe.

2. The maintenance method according to claim 1, comprising, between the steps for measuring vibrations (100) and performing the comparison with the threshold value (110), a step for segmenting (106) the measured vibrations.

3. The maintenance method according to claim 1 or claim 2, wherein the step (112) for determining the spatial coordinates corresponding to vibrations above the threshold value comprises a graphic representation (70) of the power supply rail, on which said spatial coordinates are indicated by a visual marker (74).

4. A ground-level power supply device (14) for a transport vehicle (16), said device including:
- a ground-level power supply rail (22), said power supply rail including electrically conductive segments (24) and electrically insulating segments (26), alternating and substantially aligned ; the power supply rail being designed for extending between two travel rails (18) of a transport vehicle (16);
- a device (36) for detecting spatial coordinates of a vehicle; and
- a supply shoe (32) of a vehicle, able to rub against the supply rail during a movement of said vehicle along said rail;
said detection device (36) and said supply shoe (32) being intended to equip said same vehicle,
power supply device (14) wherein :
- the supply shoe includes a sensor (34, 60, 62) detecting vibrations of said shoe in contact with the supply rail;
- the power supply device (14) includes at least one camera (38), allowing to visualize a position of the supply shoe (32) relative to the supply rail (22) or to a body of the vehicle ; and
- the power supply device includes means (40, 48) for implementing a method according to one of the preceding claims.

5. The power supply device according to claim 4, wherein the vibration sensor of the supply shoe includes an accelerometer (60, 62).

6. The power supply device according to claim 5, wherein the supply shoe comprises at least two accelerometers (60, 62), each being situated close to one end of the shoe along a movement direction (X) of the vehicle.

7. The power supply device according to claim 5, wherein the supply shoe comprises a soleplate (52) and at least one accelerometer (34, 60, 62) situated in the middle of the soleplate (52) along the movement direction (X) of the vehicle.

8. The power supply device according to any one of claims 5 to 7, wherein the supply shoe comprises a soleplate (52) and a lever (54), the lever (54) comprising a device (63) for assessing strains and/or vertical and transverse forces, said assessment device comprising at least one accelerometer and/or at least one strain gauge.

9. An installation (10) for a transport vehicle, including:
- a ground-level electrical power supply device (14) according to one of claims 4 to 8;
- a transport vehicle (16), equipped with the detection device (36) and the supply shoe (32) of said power supply device; and
- two travel rails (18) situated on either side of the supply rail,
the transport vehicle being provided with means (27) for moving on said travel rails.
